# FASCICULE DE BREVET EUROPEEN

(11) **EP 3 922 341 B1**
(45) Date de publication et mention de la délivrance du brevet: **27.11.2024**
(21) Numéro de dépôt: 21174915.5
(22) Date de dépôt: 20.05.2021
(51) Int. Cl.: B01D 53/04, B01D 53/047

(54) **PROCÉDÉ DE GESTION D'UNE UNITÉ DE TRAITEMENT D'UN GAZ PAR ADSORPTION À MODULATION DE PRESSION**
VERFAHREN ZUM BETRIEB EINER GASAUFBEREITUNGSANLAGE DURCH DRUCKWECHSELADSORPTION
METHOD FOR MANAGING A GAS PROCESSING UNIT BY ADSORPTION WITH PRESSURE MODULATION

(30) Priorité: 10.06.2020 FR 2006038
(43) Date de publication de la demande: 15.12.2021
(73) Titulaire: L'AIR LIQUIDE, SOCIÉTÉ ANONYME POUR L'ÉTUDE ET L'EXPLOITATION DES PROCÉDÉS GEORGES CLAUDE, 75007 Paris (FR)
(72) Inventeur: MATTHYSSEN, Jan, 3040 ANTWERPEN (BE); MEERMAN, Pascal, 3012 ROTTERDAM (NL); NELIS, Luc, 2040 ANTWERPEN (BE)
(74) Mandataire: Air Liquide

(56) Documents cités:
- EP-A1- 3 260 185
- WO-A1-2017/153636
- WO-A1-2018/108066
- AU-A1- 2017 245 115
- FR-A1- 2 865 554
- FR-A1- 3 078 635
- S. STRAHMAN: "STRAHMAN VALVES QUICK ACTION LINE BLINDS SOLUTIONS FOR 100% POSITIVE PIPE & EQUIPMENT ISOLATION", 31 August 2017 (2017-08-31), pages 1 - 24, XP055770361, Retrieved from the Internet <URL:https://www.strahmanvalves.com/images/companies/1/PDF/Strahman%20LB%202018.pdf?1537978238049> [retrieved on 20210129]

## Description

La présente invention concerne un procédé de gestion d'une unité de traitement d'un gaz par adsorption à modulation de pression (PSA, pour « Pressure Swing Adsorption ») notamment pour produire un flux gazeux enrichi à partir d'un flux gazeux d'alimentation, et plus particulièrement les unités de traitement par adsorption à modulation de pression (unité PSA) mettant en oeuvre au moins 6 adsorbeurs.

L'invention trouve une application particulièrement avantageuse, mais non exclusive, avec des PSA H2, O2 ou CO2.

De manière générale, un procédé par adsorption en phase gazeuse permet de séparer une ou plusieurs molécules d'un mélange gazeux les contenant, en exploitant la différence d'affinité d'un ou plusieurs adsorbants pour les différentes molécules constitutives du mélange. L'affinité d'un adsorbant pour une molécule dépend d'une part de la structure et la composition de l'adsorbant et d'autre part des propriétés de la molécule, en particulier sa taille, sa structure électronique et ses moments multipolaires. Un adsorbant peut être par exemple une zéolite, un charbon actif, une alumine activée éventuellement dopée, un gel de silice, un tamis moléculaire carboné, une structure métallo-organique, un oxyde ou hydroxyde de métaux alcalins ou alcalino-terreux, ou une structure poreuse contenant de préférence une substance capable de réagir réversiblement avec les molécules, substance telle que amines, solvants physique, complexants métalliques, oxydes ou hydroxydes métalliques par exemple.

Les matériaux adsorbants les plus classiques sont sous forme de particules (billes, bâtonnets, concassés...) mais existent également sous forme structurée tels les monolithes, roues, contacteurs à passages parallèle, tissus, fibres...

On peut distinguer 3 grandes familles de procédé par adsorption : les procédés à charge perdue, les procédés à modulation de température appelés TSA (Température Swing Adsorption) et enfin les procédés PSA (Pressure Swing Adsorption).

Dans les procédés à charge perdue, on met en place une nouvelle charge lorsque celle en cours d'utilisation est saturée par les impuretés ou plus généralement quand elle ne peut plus jouer son rôle de protection de manière suffisante.

Dans les procédés de type TSA, l'adsorbant en fin d'utilisation est régénéré in situ, c'est-à-dire que les impuretés arrêtées sont évacuées afin que le dit adsorbant récupère l'essentiel de ses capacités d'adsorption et puisse recommencer un cycle d'épuration, l'effet de régénération essentiel étant dû à une élévation de température.

Enfin, dans les procédés de type PSA, l'adsorbant en fin de phase de production est régénéré par la désorption des impuretés obtenue au moyen d'une baisse de leur pression partielle. Cette baisse de pression peut être obtenue par une baisse de la pression totale et/ ou par balayage avec un gaz exempt ou contenant peu d'impuretés.

Les procédés par adsorption modulée en pression sont utilisés aussi bien pour éliminer des traces d'impuretés, par exemple de teneur inférieure à un pourcent dans le gaz d'alimentation, que pour séparer des mélanges contenant des dizaines de pourcents de différents gaz. Dans le premier cas, on parle généralement d'épuration (par exemple un séchage de gaz) et de séparation dans le second cas (par exemple une production d'oxygène ou d'azote à partir d'air atmosphérique).

Dans le cadre de la présente invention, on désigne par le terme PSA, tout procédé d'épuration ou de séparation de gaz mettant en oeuvre une variation cyclique de la pression que voit l'adsorbant entre une pression haute, dite pression d'adsorption, et une pression basse, dite pression de régénération. Ainsi, cette appellation générique de PSA est employée indifféremment pour désigner les procédés cycliques suivants, auxquels il est aussi courant de donner des noms plus spécifiques en fonction des niveaux de pression mis en jeu ou du temps nécessaire à un adsorbeur pour revenir à son point initial (temps de cycle) :
- les procédés VSA dans lesquels l'adsorption s'effectue sensiblement à la pression atmosphérique, préférentiellement entre 0.95 et 1.25 bar abs et la pression de désorption est inférieure à la pression atmosphérique, typiquement de 50 à 400 mbar abs ;
- les procédés MPSA ou VPSA dans lesquels l'adsorption s'effectue à une pression haute supérieure à la pression atmosphérique, typiquement entre 1.5 et 6 bar abs, et la désorption à une pression basse inférieure à la pression atmosphérique, généralement comprise entre 200 et 600 mbar abs ;
- les procédés PSA proprement dits dans lesquels la pression haute est sensiblement supérieure à la pression atmosphérique, typiquement entre 3 et 50 bar abs et la pression basse sensiblement égale ou supérieure à la pression atmosphérique, généralement entre 1 et 9 bar abs ;
- les procédés RPSA (Rapid PSA) pour lesquels la durée du cycle de pression est typiquement inférieure à la minute ;
- les procédés URPSA (Ultra Rapid PSA) pour lesquels la durée du cycle de pression est de l'ordre de quelques secondes maximum.

Il convient de noter que ces diverses appellations ne sont pas standardisées et que les limites sont sujettes à variation.

On rappelle que sauf avis contraire, l'utilisation du terme PSA recouvre ici toutes ces variantes.

Un adsorbeur va donc commencer une période d'adsorption jusqu'à ce qu'il soit chargé dans le ou les constituants à arrêter à la pression haute puis va être régénéré par dépressurisation et extraction des composés adsorbés avant d'être remis en état pour recommencer une nouvelle période d'adsorption. L'adsorbeur a alors effectué un cycle de pression et le principe même du procédé PSA est d'enchaîner ces cycles les uns après les autres ; il s'agit donc d'un procédé cyclique. Le temps que met un adsorbeur pour revenir dans son état initial est appelé temps de cycle. Par principe, chaque adsorbeur suit le même cycle avec un décalage temporel qu'on appelle temps de phase ou plus simplement phase. On a donc la relation : temps de phase = temps de cycle / nombre d'adsorbeurs. On voit que le nombre de phases est égal au nombre d'adsorbeurs.

Ce cycle comporte généralement des périodes parmi :
- Production ou Adsorption au cours de laquelle le gaz d'alimentation est introduit par une des extrémités de l'adsorbeur, les composés les plus adsorbables sont adsorbés préférentiellement et le gaz enrichi en composés les moins adsorbables (gaz produit) est extrait par la seconde extrémité. L'adsorption peut se faire à pression montante, à pression sensiblement constante, voire à pression légèrement descendante ;
- Dépressurisation au cours de laquelle l' adsorbeur qui n'est plus alimenté en gaz d'alimentation est évacué par au moins une de ses extrémités d'une partie des composés contenus dans l'adsorbant et les volumes libres. En prenant comme référence le sens de circulation du fluide en période d'adsorption, on peut définir des dépressurisations à co-courant, à contre-courant ou simultanément à co-courant et contre-courant ;
- Elution ou Purge, au cours de laquelle un gaz enrichi en les constituants les moins adsorbables (gaz de purge) circule à travers le lit d'adsorbant afin d'aider à la désorption des composés les plus adsorbables. La Purge se fait généralement à contre-courant ;
- Repressurisation au cours de laquelle l'adsorbeur est au moins partiellement repressurisé avant de reprendre une période d'Adsorption. La repressurisation peut se faire à contre-courant et/ou à co-courant,
- Temps mort au cours de laquelle l'adsorbeur reste dans le même état. Ces temps morts peuvent faire partie intégrante du cycle, permettant la synchronisation d'étapes entre adsorbeurs ou faire partie d'une étape qui s'est terminée avant le temps imparti. Les vannes peuvent être fermées ou rester en l'état, selon les caractéristiques du cycle.

On connaît des unités de traitement par adsorption à modulation de pression (unités PSA) comportant un nombre N d'adsorbeurs, N étant un nombre pair supérieur ou égal à 6, par exemple N = 6, 8, 10 ou 12. Dans ce type d'unités, les adsorbeurs sont agencés par paires de sorte qu'il est possible d'isoler fluidiquement les deux adsorbeurs d'une paire, lorsqu'une défaillance est détectée au niveau d'au moins un adsorbeur de la paire, par exemple une fuite de gaz. Cette isolation est réalisée au moyen d'une vanne d'isolation. Lorsqu'une paire d'adsorbeurs est isolée fluidiquement, il est alors possible de paramétrer l'unité de sorte qu'elle fonctionne sur la base de N-2 adsorbeurs. Un problème peut apparaître lorsqu'un autre adsorbeur, appartenant à une autre paire, devient défectueux. L'isolation de cette autre paire nécessite de paramétrer l'unité pour fonctionner sur la base de N-4 adsorbeurs. Le rendement de cette unité est alors fortement réduit. En outre, il existe au moins deux adsorbeurs de l'unité, à savoir un adsorbeur dans chaque paire isolée, qui se retrouvent inexploités bien qu'ils soient en parfait état de fonctionnement. Cette situation n'est pas optimale.

La présente invention vise à remédier efficacement à ces inconvénients en proposant un procédé de gestion d'une unité de traitement d'un gaz par adsorption à modulation de pression, l'unité comportant :
- au moins N adsorbeurs, N étant un nombre pair supérieur ou égal à 6, les N adsorbeurs étant agencés par paires,
- une pluralité de vannes d'isolation, pour l'isolation sélective d'au moins une paire par rapport à l'unité,
- une pluralité de vannes de cycle, pour contrôler le cycle de pression de chaque adsorbeur,
- chaque paire étant agencée pour être isolée sélectivement, de sorte que l'isolation d'une paire permette l'isolation fluidique des deux adsorbeurs de la paire, par rapport à l'unité, l'isolation d'une paire étant réalisée par la fermeture d'au moins une vanne d'isolation,
- un dispositif de commande,
- une pluralité d'interfaces pour l'accès à des moyens d'instrumentation de chaque adsorbeur,

caractérisé en ce que lorsqu'une première paire est isolée fluidiquement par rapport à l'unité par la fermeture d'au moins une vanne d'isolation, la première paire comportant un premier adsorbeur et un deuxième adsorbeur, et le dispositif de commande étant configuré pour commander seulement N-2 adsorbeurs de l'unité,
l'isolation d'un troisième adsorbeur comporte les étapes de :
   - paramétrer le dispositif de commande pour commander seulement N-4 adsorbeurs de l'unité,
   - isoler fluidiquement une deuxième paire par rapport à l'unité, par la fermeture d'au moins une vanne d'isolation, la deuxième paire comportant le troisième adsorbeur et un quatrième adsorbeur,
   - isoler fluidiquement l'un des premier et deuxième adsorbeurs, de sorte qu'il soit isolé de l'unité indépendamment de l'isolation fluidique de la paire à laquelle il appartient, notamment par l'installation d'au moins un bouchon hermétique,
   - isoler fluidiquement le troisième adsorbeur, de sorte qu'il soit isolé de l'unité indépendamment de l'isolation fluidique de la paire à laquelle il appartient, notamment par l'installation d'au moins un bouchon hermétique,
   - alors que les première et deuxième paires sont isolées fluidiquement de l'unité, configurer les interfaces de sorte à intervertir les moyens d'instrumentation de l'autre des premier et deuxième adsorbeurs et les moyens d'instrumentation du quatrième adsorbeur,
   - mettre en communication fluidique les première et deuxième paires par rapport à l'unité, par l'ouverture d'au moins une vanne d'isolation,
   - paramétrer le dispositif de commande pour commander seulement N-2 adsorbeurs de l'unité.

L'invention permet ainsi d'optimiser le procédé de production d'un gaz d'une unité de traitement par adsorption à modulation de pression, lorsqu'au moins deux adsorbeurs appartenant à deux paires distinctes sont défectueux.

Selon une réalisation, le dispositif de commande est configuré pour permettre à l'unité de fonctionner avec au moins une paire d'adsorbeurs isolés.

Selon une réalisation, le procédé est mis en oeuvre, sans arrêter l'unité, de sorte que la production soit ininterrompue.

Selon une réalisation, les vannes de cycle sont distinctes des vannes d'isolation.

Selon une réalisation, l'unité comporte un moyen d'isolation fluidique, pour permettre l'isolation fluidique d'au moins un des adsorbeurs par rapport à l'unité, le moyen d'isolation fluidique étant distinct de la vanne d'isolation.

Selon une réalisation, le moyen d'isolation comporte un bouchon hermétique, tel qu'une bride pleine ou un joint à lunette.

Selon une réalisation, le procédé comporte l'étape d'installer un bouchon hermétique pour l'isolation fluidique de l'un des premier et deuxième adsorbeurs, de sorte qu'il soit isolé de l'unité indépendamment de l'isolation fluidique de la paire à laquelle il appartient.

Selon une réalisation, le procédé comporte l'étape d'installer un bouchon hermétique pour l'isolation fluidique du troisième adsorbeur, de sorte qu'il soit isolé de l'unité indépendamment de l'isolation fluidique de la paire à laquelle il appartient.

Selon une réalisation, le procédé comporte l'étape de retirer ou désactiver une pluralité de vannes de cycle, notamment de retirer ou désactiver les vannes de cycles qui sont en vis-à-vis des bouchons hermétiques.

Selon une réalisation, le procédé comporte l'étape de purger l'un des premier et deuxième adsorbeurs et le troisième adsorbeur.

Selon une réalisation, le procédé comporte l'étape d'inerter l'un des premier et deuxième adsorbeurs et le troisième adsorbeur.

Selon une réalisation, les interfaces comportent des câbles, notamment électriques et/ou optiques, reliant les moyens d'instrumentation de chaque adsorbeur au dispositif de commande, le procédé comportant notamment l'étape de permuter l'extrémité des câbles reliée aux moyens d'instrumentation de l'autres des premier et deuxième adsorbeur avec l'extrémité des câbles reliée aux moyens d'instrumentation du troisième adsorbeur.

Selon une réalisation, les moyens d'instrumentation comportent des capteurs, notamment des capteurs de pression et des commutateurs de vannes.

Selon une réalisation, l'unité comporte 12 adsorbeurs.

Selon une réalisation, l'unité est agencée pour produire du dihydrogène.

L'invention sera mieux comprise à la lecture de la description qui suit et à l'examen des figures qui l'accompagnent. Ces figures ne sont données qu'à titre illustratif mais nullement limitatif de l'invention.
[Fig. 1] La figure 1 est une représentation schématique d'une unité PSA dans laquelle le procédé selon l'invention est mis en oeuvre ;
[Fig. 2] La figure 2 est une représentation schématique de l'unité PSA de la figure 1, dans laquelle une paire est isolée ;
[Fig. 3] La figure 3 est une représentation schématique de l'unité PSA de la figure 2, dans laquelle une autre paire est isolée ;
[Fig. 4] La figure 4 est une représentation schématique de l'unité PSA de la figure 3, mettant en oeuvre le procédé selon l'invention.

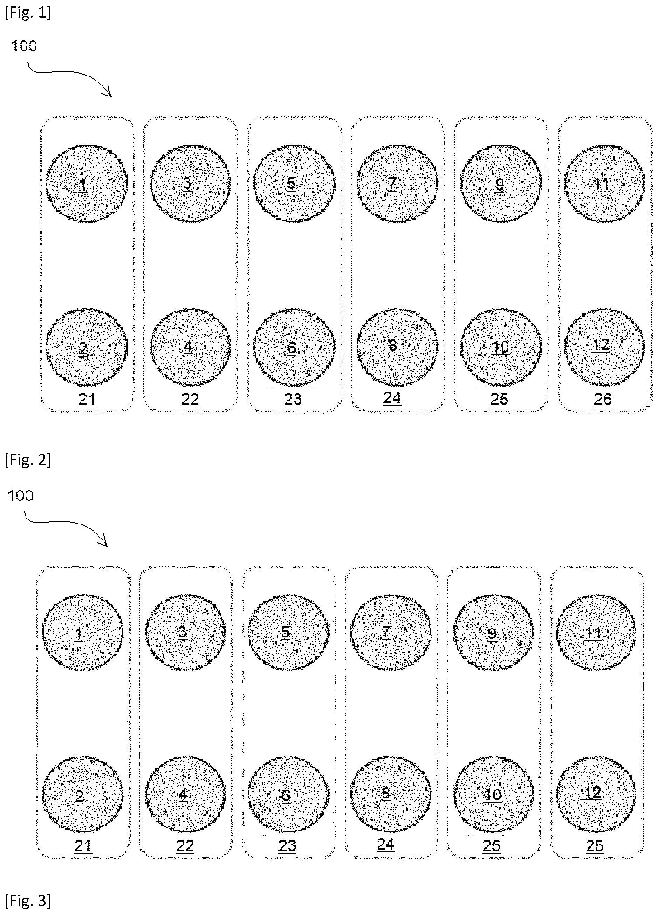

En référence à la figure 1, on a représenté une unité PSA 100 mettant en oeuvre 12 adsorbeurs 1-12. Cette unité PSA 100 est configurée de sorte à comporter 6 paires 21-26 d'adsorbeurs (une paire comportant les adsorbeurs 1 et 2, une autre paire comportant les adsorbeurs 3 et 4, etc.). Chaque paire 21-26 de l'unité PSA 100 est agencée pour être isolée sélectivement, de sorte que l'isolation d'une paire permette l'isolation fluidique des deux adsorbeurs de la paire, par rapport à l'unité 100. Plus précisément, chaque paire 21-26 peut être isolée vis-à-vis du reste de l'unité 100 par une vanne d'isolation non représentée.

Le choix de regrouper les adsorbeurs 1-12 par paires 21-26 pour l'isolation d'au moins un adsorbeur 1-12 de l'unité est un compromis entre la souplesse d'utilisation et la complexité des installations techniques de l'unité PSA 100.

L'unité 100 comporte en outre une pluralité de vannes de cycle et un dispositif de commande pour commander les vannes de cycle, pour assurer le cycle de pression. Chaque adsorbeur 1-12 est ainsi commandé par des vannes de cycle qui lui sont attachées.

L'unité 100 comporte en outre une pluralité d'interfaces pour l'accès à des moyens d'instrumentation de chaque adsorbeur 1-12.

Plus précisément, ces interfaces comportent des câbles électriques, reliant les moyens d'instrumentation de chaque adsorbeur 1-12 au dispositif de commande.

Les moyens d'instrumentation comportent des capteurs de pression et des commutateurs de vannes de cycle.

Ainsi, le dispositif de commande peut lire les informations délivrées par les capteurs et commander les vannes de cycle de chaque adsorbeur 1-12.

Lorsqu'un défaut est détecté sur un des adsorbeur 1-12 (ou bien pour réaliser une opération de maintenance sur un des adsorbeurs 1-12), on peut choisir d'isoler fluidiquement une des paires 21-26 en actionnant la vanne d'isolation de cette paire 21-26. Avant de procéder à l'isolation de la paire 21-26, on commence par configurer le dispositif de commande pour qu'il commande seulement 10 des 12 adsorbeurs de l'unité (le dispositif de commande est pré-configuré pour être en mesure de commander sélectivement soit la totalité des 12 adsorbeurs de l'unité, soit 10, soit 8, soit 6 des adsorbeurs de l'unité. Dans tous les cas, le cycle sera adapté à la configuration retenue. Dès lors que le dispositif de commande est configuré pour commander seulement 10 des 12 adsorbeurs de l'unité 100, on procède à l'isolation fluidique de la paire que l'on souhaite isoler. Cette isolation est réalisée par un actionnement manuel de la vanne d'isolation attachée à la paire considérée.

La figure 2 montre l'unité 100 de la figure 1 dans laquelle on a isolé fluidiquement une première paire 23, comportant un premier adsorbeur 5 et un deuxième adsorbeur 6, par rapport aux autres adsorbeurs de l'unité 100.

L'unité 100 fonctionne alors avec seulement 10 adsorbeurs (ceux qui appartiennent aux paires 21, 22, 24, 25 et 26).

Dans ces conditions de fonctionnement de l'unité PSA 100, et alors que l'on souhaite isoler fluidiquement un troisième adsorbeur 8 de l'unité 100, on met en oeuvre le procédé suivant.

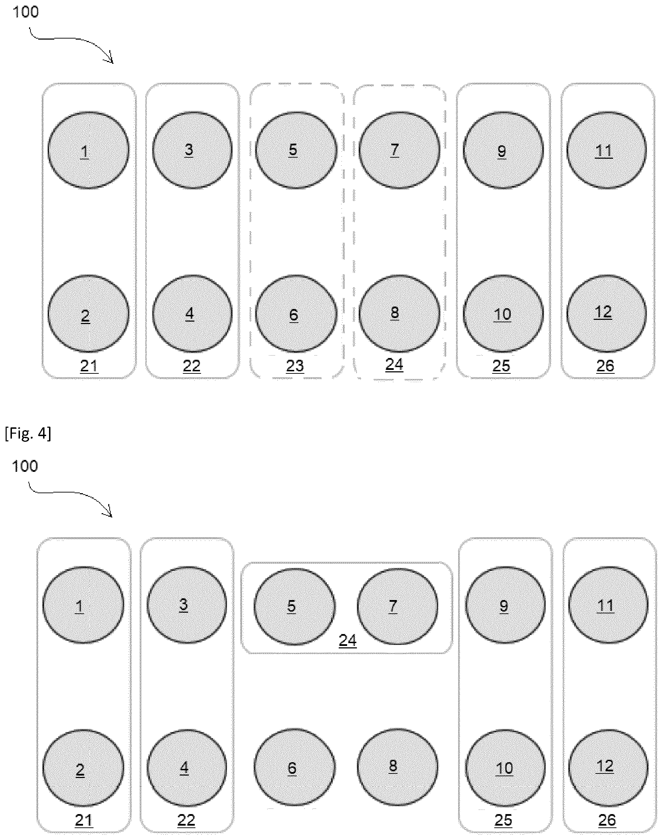

En référence à la figure 3, on commence par paramétrer le dispositif de commande pour qu'il commande seulement 8 adsorbeurs de l'unité 100 (dans l'exemple de la figure 3, les adsorbeurs des paires 21,22,25,26.

Ensuite, on isole fluidiquement une deuxième paire 24 vis-à-vis de l'unité 100. Cette paire 24 comporte le troisième adsorbeur 8 et un quatrième adsorbeur 7.

Partant du principe que le deuxième adsorbeur 6 et le troisième adsorbeur 8 sont défectueux et que le premier adsorbeur 5 et le quatrième adsorbeur 7 sont opérationnels, le procédé va permettre la remise en service des premier 5 et quatrième 7 adsorbeurs afin d'améliorer le rendement de l'unité 100.

On isole fluidiquement les deuxième 6 et troisième 8 adsorbeurs vis-à-vis des autres adsorbeurs de l'unité 100. Cette opération est réalisée par la pose de joints à lunette faisant office de bouchons hermétiques de sorte à empêcher toute fuite de gaz de l'unité 100, tout en permettant une isolation de ces deuxième 6 et troisième 8 adsorbeurs. Cette isolation étant maintenant indépendante de l'isolation de la paire à laquelle ils appartiennent.

Les vannes de cycles commandant ces deuxième 6 et troisième 8 adsorbeurs peuvent être retirées.

Les deuxième 6 et troisième 8 adsorbeurs sont ensuite purgés et inertés afin de permettre des opérations de maintenance sans risque lié à la présence de gaz dangereux.

En référence à la figure 4, on configure l'unité 100 de sorte à permettre le réemploi des premier 5 et quatrième 7 adsorbeurs au sein de l'unité 100.

On permute l'extrémité (ou le connecteur) des câbles électriques qui est reliée aux moyens d'instrumentation du premier adsorbeur 5 avec l'extrémité des câbles électriques qui est reliée au troisième adsorbeur 8.

Ainsi, le dispositif de commande, lorsqu'il cherche à commander le troisième adsorbeur 8, commandera en réalité le premier adsorbeur 5.

Par cette permutation des câbles électriques, le dispositif de commande sera en mesure de gérer les premier 5 et quatrième 7 adsorbeurs, comme s'ils appartenaient à la deuxième paire 24.

Le procédé comporte ensuite l'étape de mettre en communication fluidique les première 23 et deuxième 24 paires par rapport à l'unité, en ouvrant les vannes d'isolation respectives. À noter que grâce aux bouchons hermétiques, les deuxième 6 et troisième 8 adsorbeurs restent isolés fluidiquement par rapport aux autres adsorbeurs de l'unité 100.

Le procédé comporte ensuite l'étape de paramétrer le dispositif de commande pour commander seulement 10 adsorbeurs de l'unité (les deuxième 6 et troisième 8 adsorbeurs n'étant pas utilisés).

## Revendications

1. Procédé de gestion d'une unité (100) de traitement d'un gaz par adsorption à modulation de pression, l'unité (100) comportant :
- au moins N adsorbeurs (1-12), N étant un nombre pair supérieur ou égal à 6, les N adsorbeurs (1-12) étant agencés par paires (21-26),
- une pluralité de vannes d'isolation, pour l'isolation sélective d'au moins une paire (21-26) par rapport à l'unité (100),
- une pluralité de vannes de cycle, pour contrôler le cycle de pression de chaque adsorbeur (1-12),
- chaque paire (21-26) étant agencée pour être isolée sélectivement, de sorte que l'isolation d'une paire (21-26) permette l'isolation fluidique des deux adsorbeurs de la paire (21-26), par rapport à l'unité (100), l'isolation d'une paire (21-26) étant réalisée par la fermeture d'au moins une vanne d'isolation,
- un dispositif de commande,
- une pluralité d'interfaces pour l'accès à des moyens d'instrumentation de chaque adsorbeur (1-12),
**caractérisé en ce que** lorsqu'une première paire (21-26) est isolée fluidiquement par rapport à l'unité (100) par la fermeture d'au moins une vanne d'isolation, la première paire (21-26) comportant un premier adsorbeur et un deuxième adsorbeur, et le dispositif de commande étant configuré pour commander seulement N-2 adsorbeurs de l'unité,
l'isolation d'un troisième adsorbeur comporte les étapes de :
- paramétrer le dispositif de commande pour commander seulement N-4 adsorbeurs de l'unité (100),
- isoler fluidiquement une deuxième paire (21-26) par rapport à l'unité (100), par la fermeture d'au moins une vanne d'isolation, la deuxième paire (21-26) comportant le troisième adsorbeur et un quatrième adsorbeur,
- isoler fluidiquement l'un des premier et deuxième adsorbeurs, de sorte qu'il soit isolé de l'unité (100) indépendamment de l'isolation fluidique de la paire à laquelle il appartient, notamment par l'installation d'au moins un bouchon hermétique,
- isoler fluidiquement le troisième adsorbeur, de sorte qu'il soit isolé de l'unité (100) indépendamment de l'isolation fluidique de la paire à laquelle il appartient, notamment par l'installation d'au moins un bouchon hermétique,
- alors que les première et deuxième paires (21-26) sont isolées fluidiquement de l'unité (100), configurer les interfaces de sorte à intervertir les moyens d'instrumentation de l'autre des premier et deuxième adsorbeurs et les moyens d'instrumentation du troisième adsorbeur,
- mettre en communication fluidique les première et deuxième paires par rapport à l'unité (100), par l'ouverture d'au moins une vanne d'isolation,
- paramétrer le dispositif de commande pour commander seulement N-2 adsorbeurs de l'unité (100).

2. Procédé selon la revendication précédente, comportant l'étape de retirer ou désactiver une pluralité des vannes de cycle.

3. Procédé selon l'une des revendications précédentes, comportant l'étape de purger l'un des premier et deuxième adsorbeurs et le troisième adsorbeur.

4. Procédé selon la revendication précédente, comportant l'étape d'inerter l'un des premier et deuxième adsorbeurs et le troisième adsorbeur.

5. Procédé selon l'une des revendications précédentes, les interfaces comportent des câbles reliant les moyens d'instrumentation de chaque adsorbeur (1-12) au dispositif de commande, le procédé comportant l'étape de permuter l'extrémité des câbles reliée aux moyens d'instrumentation de l'autres des premier et deuxième adsorbeurs avec l'extrémité des câbles reliée aux moyens d'instrumentation du troisième adsorbeur.

6. Unité (100) de traitement d'un gaz par adsorption à modulation de pression, pour la mise en oeuvre du procédé selon l'une quelconque des revendications précédentes, l'unité (100) comportant 12 adsorbeurs (1-12).

7. Utilisation d'une unité (100) selon la revendication précédente pour produire du dihydrogène.

## Patentansprüche

1. Verfahren zum Betreiben einer Einheit (100) zur Behandlung eines Gases durch Druckwechseladsorption, wobei die Einheit (100) umfasst:
- mindestens N Adsorber (1-12), wobei N eine gerade Zahl größer oder gleich 6 ist, wobei die N Adsorber (1-12) in Paaren (21-26) angeordnet sind,
- eine Vielzahl von Isolationsventilen, zur selektiven Isolierung von mindestens einem Paar (21-26) von der Einheit (100),
- eine Vielzahl von Zyklusventilen, um den Druckzyklus jedes Adsorbers (1-12) zu steuern,
- jedes Paar (21-26) so angeordnet ist, dass es selektiv isoliert werden kann, so dass die Isolierung eines Paares (21-26) die fluidische Isolierung der beiden Adsorber des Paares (21-26) von der Einheit (100) ermöglicht, wobei die Isolierung eines Paares (21-26) durch das Schließen von mindestens einem Isolierungsventil erreicht wird,
- ein Steuergerät,
- eine Vielzahl von Schnittstellen für den Zugang zu Instrumentierungsmitteln jedes Adsorbers (1-12),
**dadurch gekennzeichnet dass**, wenn ein erstes Paar (21-26) von der Einheit (100) durch Schließen mindestens eines Isolationsventils fluidisch isoliert ist, das erste Paar (21-26) einen ersten Adsorber und einen zweiten Adsorber umfasst, und die Steuervorrichtung so konfiguriert ist, dass sie nur N-2 Adsorber der Einheit steuert,
die Isolierung eines dritten Adsorbers die folgenden Schritte umfasst:
- das Steuergerät so einstellen, dass es nur N-4 Adsorber der Einheit (100) steuert,
- fluidisches Isolieren eines zweiten Paars (21-26) von der Einheit (100) durch Schließen mindestens eines Isolationsventils, wobei das zweite Paar (21-26) den dritten Adsorber und einen vierten Adsorber umfasst,
- einen der ersten und zweiten Adsorber fluidisch zu isolieren, so dass er unabhängig von der fluidischen Isolierung des Paars, zu dem er gehört, von der Einheit (100) isoliert ist, insbesondere durch die Installation von mindestens einem hermetischen Stopfen,
- den dritten Adsorber fluidisch zu isolieren, so dass er unabhängig von der fluidischen Isolierung des Paares, zu dem er gehört, von der Einheit (100) isoliert ist, insbesondere durch die Installation von mindestens einem hermetischen Stopfen,
- während das erste und das zweite Paar (21-26) fluidisch von der Einheit (100) isoliert sind, die Schnittstellen so konfigurieren, dass die Instrumentierungsmittel des anderen der ersten und zweiten Adsorber und die Instrumentierungsmittel des dritten Adsorbers vertauscht werden,
- das erste und das zweite Paar in Bezug auf die Einheit (100) in Fluidverbindung zu bringen, indem mindestens ein Isolationsventil geöffnet wird,
- das Steuergerät so einstellen, dass es nur N-2 Adsorber der Einheit (100) steuert.

2. Verfahren nach dem vorhergehenden Anspruch, das den Schritt des Entfernens oder Deaktivierens einer Vielzahl von Zyklusventilen umfasst.

3. Verfahren nach einem der vorhergehenden Ansprüche, umfassend den Schritt des Spülens eines der ersten und zweiten Adsorber und des dritten Adsorbers.

4. Verfahren nach dem vorhergehenden Anspruch, umfassend den Schritt des Inertisierens eines der ersten und zweiten Adsorber und des dritten Adsorbers.

5. Verfahren nach einem der vorhergehenden Ansprüche, wobei die Schnittstellen Kabel umfassen, die die Instrumentierungsmittel jedes Adsorbers (1-12) mit der Steuervorrichtung verbinden, wobei das Verfahren den Schritt des Vertauschens des Endes der Kabel, das mit den Instrumentierungsmitteln des anderen der ersten und zweiten Adsorber verbunden ist, mit dem Ende der Kabel, das mit den Instrumentierungsmitteln des dritten Adsorbers verbunden ist, umfasst.

6. Einheit (100) zur Behandlung eines Gases durch Druckwechseladsorption, zur Durchführung des Verfahrens nach einem der vorhergehenden Ansprüche, wobei die Einheit (100) 12 Adsorber (1-12) umfasst.

7. Verwendung einer Einheit (100) nach dem vorhergehenden Anspruch zur Herstellung von Wasserstoff.

## Claims

1. A method of managing a unit (100) for treating a gas by pressure swing adsorption, the unit (100) comprising :
- at least N adsorbers (1-12), N being an even number greater than or equal to 6, the N adsorbers (1-12) being arranged in pairs (21-26),
- a plurality of isolation valves, for selectively isolating at least one pair (21-26) from the unit (100),
- a plurality of cycle valves to control the pressure cycle of each adsorber (1-12),
- each pair (21-26) being arranged to be selectively isolated, so that the isolation of a pair (21-26) enables the two adsorbers of the pair (21-26) to be fluidically isolated from the unit (100), the isolation of a pair (21-26) being achieved by closing at least one isolation valve,
- a control device,
- a plurality of interfaces for access to instrumentation means for each adsorber (1-12),
**characterised in that** when a first pair (21-26) is fluidly isolated from the unit (100) by the closure of at least one isolation valve, the first pair (21-26) comprising a first adsorber and a second adsorber, and the control device being configured to control only N-2 adsorbers of the unit,
the isolation of a third adsorber comprises the steps of:
- set the control device to control only N-4 adsorbers in the unit (100),
- fluidically isolating a second pair (21-26) from the unit (100) by closing at least one isolation valve, the second pair (21-26) comprising the third adsorber and a fourth adsorber,
- fluidically isolating one of the first and second adsorbers, so that it is isolated from the unit (100) independently of the fluidic isolation of the pair to which it belongs, in particular by installing at least one hermetic plug,
- fluidically isolating the third adsorber, so that it is isolated from the unit (100) independently of the fluidic isolation of the pair to which it belongs, in particular by installing at least one hermetic plug,
- while the first and second pairs (21-26) are fluidically isolated from the unit (100), configure the interfaces so as to swap the instrumentation means of the other of the first and second adsorbers and the instrumentation means of the third adsorber,
- place the first and second pairs in fluid communication with the unit (100) by opening at least one isolation valve,
- set the control device to control only N-2 adsorbers in the unit (100).

2. Method according to the preceding claim, comprising the step of removing or deactivating a plurality of the cycle valves.

3. Method according to one of the preceding claims, comprising the step of purging one of the first and second adsorbers and the third adsorber.

4. Method according to the preceding claim, comprising the step of inerting one of the first and second adsorbers and the third adsorber.

5. Method according to one of the preceding claims, the interfaces comprising cables connecting the instrumentation means of each adsorber (1-12) to the control device, the method comprising the step of swapping the end of the cables connected to the instrumentation means of the other of the first and second adsorbers with the end of the cables connected to the instrumentation means of the third adsorber.

6. Unit (100) for treating a gas by pressure swing adsorption, for carrying out the process according to any one of the preceding claims, the unit (100) comprising 12 adsorbers (1-12).

7. Use of a unit (100) according to the preceding claim to produce hydrogen.
